(19) Europäisches Patentamt
European Patent Office
Office européen des brevets

(11) **EP 1 351 047 A1**

(12) **EUROPÄISCHE PATENTANMELDUNG**

(43) Veröffentlichungstag:
08.10.2003 Patentblatt 2003/41

(51) Int Cl.⁷: **G01N 15/06**

(21) Anmeldenummer: **03006282.2**

(22) Anmeldetag: **21.03.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **04.04.2002 DE 10214825**

(71) Anmelder: **Bayer CropScience AG**
**40789 Monheim (DE)**

(72) Erfinder: **Wangermann, Klaus, Dr.**
**47800 Krefeld (DE)**

(54) **Verfahren und Vorrichtung zur Kontrolle der Dispergierbarkeit von Feststoff-Formulierungen**

(57) Die Erfindung betrifft eine Vorrichtung und Verfahren zur Kontrolle der Dispergierbarkeit von Feststoff-Formulierungen. Das Verfahren der Einzelmessung besteht in der Messung des zeitlichen Verlaufs der Dispergierbarkeit einer Probe in einer Flüssigkeit. Das Verfahren der Aufbaumessung besteht in einem Nachweis von Hartkörnern in einer Dispersion. Die erfindungsgemäße Vorrichtung weist eine Pumpe (330), einen Durchflussmesser (340), ein Aufgabegefäß (300) für die Probe und ein Filterelement (320), die über einen Flüssigkeitskreislauf miteinander verbunden sind, auf, wobei das Filterelement bezüglich der durch die Pumpe vorgegebenen Strömungsrichtung stromabwärts hinter dem Aufgabegefäß angeordnet ist.

Fig. 3

EP 1 351 047 A1

**Beschreibung**

Die Erfindung betrifft ein Verfahren und Vorrichtung zur Kontrolle der Dispergierbarkeit von Feststoff-Formulierungen.

In der landwirtschaftlichen Praxis wird der Formuliertyp der wasserdispergierbaren Granulate für Pflanzenschutzmittel häufig verwendet. Aus Primärteilchen im Größenbereich von etwa ein bis über zehn Mikrometern werden mit Hilfe von Formulierhilfsmitteln, Klebern und geeigneten Granuliergeräten Granulate aufgebaut, die ihrerseits Abmessungen von wenigen hundert Mikrometern bis zu einigen Millimetern haben. Solche Granulate müssen einerseits abrieb- und bruchfest sein und andererseits beim Einbringen ins Wasser schnell und vollständig in die Primärteilchen dispergieren. Dieses Ziel ist schwierig zu erreichen, weil im allgemeinen bei verbesserter Abrieb- und Bruchfestigkeit die Dispergierbarkeit schlechter wird und umgekehrt.

Die gewünschte, vollständige Dispergierung bedeutet den Zerfall der Granulate in die Primärteilchen beim Einbringen in Wasser oder eine andere Flüssigkeit. Bei einem unvollständigen Zerfall verbleiben sogenannte Hartkörner in der Dispersion, die eine Filterverstopfung hervorrufen können. Hartkörner können z.B. Wirkstoffteilchen sein, die infolge einer Temperaturbelastung nach der Herstellung zusammen gesintert sind, oder auch mangelhaft gemahlene Bestandteile der Formulierung, die dann bereits bei der Herstellung der Granulate vorhanden sind und mit in diese eingebaut wurden. Hartkörner können im Größenbereich von einigen zehn bis zu mehreren hundert Mikrometern vorkommen und sind dadurch gekennzeichnet, dass sie auf einem Filter entsprechender Maschenweite zurückgehalten werden und dieses entweder gar nicht oder nur bei Anwendung von erhöhtem Druck passieren können.

Mangelhafte Dispergierung ist beim Einsatz der Produkte in der Praxis direkt sichtbar, und kann zum Verstopfen von Filtern im Spritztank einer Feldspritze führen und die biologische Wirksamkeit beeinträchtigen. Insofern ist die kontinuierliche Überwachung der Produkteigenschaft Dispergierbarkeit bei der Entwicklung und Produktion von Granulaten notwendig. Die schnelle und vollständige Dispergierung ist ein wichtiges Qualitätsmerkmal für Granulate, sie ist aber auch für andere Feststoff-Formulierungen, die in Flüssigkeiten dispergiert werden und auch solche, die eine andere als eine landwirtschaftliche Anwendung haben, ein wichtiges Qualitätsmerkmal.

Für die Beurteilung der Dispergierbarkeit von Pflanzenschutzpräparaten sind z. B. international "genormte" Methoden bekannt; siehe CIPAC Handbook, Volume 1, S. 860-868 (Analysis of Technical an Formulated Pesticides, compiled by R. deB. Ashworth, J. Henriet, J. F. Lovett; Edited by G. R. Raw Herfordshire England 1970) und spätere Ausgaben, z. B. Volume F, S. 416-419.

Darin ist die Methode CIPAC MT 15 ("Suspensibility of water dispersible powders") beschrieben, nach der die Qualität von wasserdispergierbaren Pulvern in einem einfachen Standzylindertest ermittelt wird. Ergänzt wird diese MT 15 durch die Methode CIPAC MT 168 ("Determination of the suspension stability of water dispersible granules"), die bis auf Einzelheiten mit MT 15 übereinstimmt, aber für Granulate gedacht ist. Es wird danach ein 250 ml Standzylinder mit Wasser gefüllt, die Granulate werden hineingegeben und der Zylinder wird verschlossen. Sodann wird der Zylinder mehrmals um 180 Grad gekippt, so dass die Granulate mit dem Wasser vermischt werden und dabei auch zerfallen können. Bei sehr gut wasser-dispergierbaren Granulaten entsteht dann eine Suspension. Diese anfänglich homogene Suspension wird für 30 min in Ruhe stehen gelassen, wobei die Feststoffteilchen, die in der Regel ein Dichte größer als 1 g/cm$^3$ haben, infolge der Schwerkraft im Wasser (Dichte 1 g/cm$^3$) absinken. Nach 30 min werden die oberen 9/10 der Suspension entfernt, und in dem verbliebenen unteren 1/10 wird ermittelt, wie viel Masse sich dort angesammelt hat. Wäre die Suspension vollkommen stabil, so wären das genau so viel wie zu Beginn des Versuches, nämlich genau 1/10 (= 10 %). Bei realen Suspensionen sinken jedoch die Teilchen nach unten und man findet mehr als 10 % Bodensatz. Für die Produktqualität gilt dann: je höher der gemessene Bodensatz um so schlechter ist die Produktqualität. Der Versuch ist so dimensioniert, dass alle Teilchen größer etwa 10 μm zum Bodensatz beitragen, von den kleineren Teilchen aber nur ein gewisser Bruchteil. Das Versuchsergebnis ist eine Zahl, die zwar zu Vergleichszwecken nützlich ist, die jedoch in der Praxis keine direkte Entsprechung hat; sie sagt tendenziell etwas darüber aus, wie viel Bodensatz sich beim Stehenlassen des Ansatzes - z. B. über Nacht - bilden würde. Die Dynamik des Granulatzerfalls, die in der Praxis eine große Rolle spielt, wird damit nicht erfasst. Weiterhin sagt der Versuch auch nichts über die Gefahr der Filterverstopfung aus, da die "kritische Teilchengröße", die das Ergebnis bestimmt, in diesem Versuch etwa 10 μm beträgt, während die Filter in Feldspritzen aber mindestens 150 μm Maschenweite aufweisen. Somit bedeutet auch ein hoher Bodensatzwert nicht unbedingt, dass es zu Filterverstopfungen kommen muss, d.h. das Versuchsergebnis kann diesbezüglich irreführend sein.

Bei der sog. "DuPont-Methode" (Thomas Cosgrove, DuPont Agricultural Enterprise, Stine-Haskell Reserach Center, 1090 Elkton Road, Newark, Delaware 19711-3507, U.S.A.; Revised method for break up time of WGs (CIPAC/ 4185/R)), werden Granulate in ein kleines, zylinderförmiges Körbchen gegeben, dessen Wände und der Boden aus einem Siebgewebe mit 150 μm Maschenweite bestehen. Dieses Körben wird in ein Becherglas mit Wasser eingetaucht und im Wasser auf und nieder bewegt. Dabei können gut wasserdispergierbare Granulate zerfallen und die Bruchstücke das Innere des Körbchens über das Siebgewebe nach außen passieren. Nach einer festgelegten Zeit wird ein eventueller Rückstand im Körbchen aufgefangen, getrocknet, gewogen und der Rückstand im Beziehung zur Einwaage gesetzt. Bei diesem Versuch wird die Dynamik des Zerfalls dadurch teilweise berücksichtigt, dass die Bewegung des Körbchens im Wasser eine gewisse Ähnlichkeit mit den Verhältnissen in einer Feldspritze aufweist. Jedoch findet der Zerfall in einer Feldspritze in einer viel stärkeren Strömung, erzeugt von einer kräftigen Pumpe, statt, so dass dort ganz andere Kräfte bzw. Scherbeanspruchungen vorliegen. Die Siebmaschenweite ist bei diesem Test zwar praxisgerechter als bei CIPAC MT 168, sie kann aber nicht verändert werden. Das Ergebnis ist ebenfalls nur eine einzige Zahl, die keine direkte Entsprechung in der Praxis hat.

Diese bekannten Tests ermitteln nur Teilaspekte der Produktqualität und berücksichtigen die wichtigen dynamischen Vorgänge des Dispergierens beim Eintragen des Produktes in den Spritztank einer Feldspritze gar nicht, zu einseitig oder in nicht praxisrelevanter Weise.

Prinzipiell besteht natürlich die Möglichkeit der Beurteilung des Dispergierverhaltens einer Feststoff-Formulierung in einem Test mit einer Feldspritze wie sie von Landwirten zum Versprühen von Pflanzenschutzmitteln verwendet werden. Ein solcher Test ist jedoch sehr aufwendig und teuer. Es werden dafür bis zu 30 kg Produkt benötigt, und es muss eine Abwassermenge von bis zu 3000 Liter entsorgt werden, so dass solche Praxistests weder für die Entwicklung von Produkten noch für die Produktionskontrolle in Frage kommen. Aus technischen Gründen ist es ebenfalls nicht möglich, im "scale-down"-Verfahren einen solchen Labortest z.B. als maßstäblich verkleinerte Feldspritze aufzubauen.

Die Aufgabe der Erfindung besteht deshalb darin, die Dispergierbarkeit von Feststoff-Formulierungen im Labor unter möglichst geringem Aufwand an Probenmaterial, Wasser, Abwasser und Zeit zu simulieren.

Unter Proben werden im folgenden Feststoff-Formulierungen von Wirkstoffen verstanden, insbesondere Granulate, die aus Primärteilchen aufgebaut sind und außer dem Wirkstoff in der Regel noch Hilfsmittel, wie inerte Füllstoffe, Kleber und Dispergiermittel enthalten.

Die Lösung der erfindungsgemäßen Aufgabe besteht in zwei erfindungsgemäßen Verfahren, die einzeln oder nacheinander auf eine Probe angewendet werden können.

Mit diesen Verfahren werden die beiden wesentlichen Aspekte zur Dispergierbarkeit kontrolliert, die die Qualität eine Probe bei der Applikation ausmachen, nämlich die Geschwindigkeit des Zerfalls in einer Flüssigkeit durch das erste erfindungsgemäße Verfahren und die Vollständigkeit des Zerfalls zur Vermeidung von Filterverstopfungen durch das zweite erfindungsgemäße Verfahren.

Das erste erfindungsgemäße Verfahren, die sogenannte Einzelmessung, besteht in der Messung des zeitlichen Verlaufs der Dispergierbarkeit einer Probe in einer Flüssigkeit. Dabei wird

a. die Flüssigkeit im Kreislauf durch ein Aufgabegefäß für die Probe, ein bezüglich der durch die Pumpe vorgegebenen Strömungsrichtung stromabwärts hinter dem Aufgabegefäß angeordnetes Filterelement und einen Durchflussmesser gepumpt,

b. der Durchfluss durch den Durchflussmesser über die Zeit gemessen während und nachdem die Probe in das Aufgabegefäß gegeben wird bzw. wurde, und

c. charakteristische Merkmale der Messkurve des Durchflusses über die Zeit ausgewertet.

Die Eingabe der Probe in das Aufgabegefäß erfolgt so, dass die Probe schnell, gleichmäßig im Wasser verteilt wird und nach wenigen Sekunden in das Filterelement gelangt. Dort wird sie am Filtergewebe abrupt gestoppt und aufkonzentriert, falls sie noch nicht zerfallen ist. Der Messeffekt kommt dadurch zustande, dass vor, während und nach der Probeneingabe ständig der Flüssigkeitsdurchfluss durch das Filterelement gemessen und über der Zeit aufgezeichnet wird. Der Durchfluss beträgt anfänglich 100 % und vermindert sich beim Anstauen der Probe am Filterelement zunächst. Je nach Schnelligkeit des Probenzerfalls steigt der Durchfluss irgendwann wieder an. Wie lange das dauert und wie stark der Durchfluss zuvor gegen Null absinkt, charakterisiert die Probenqualität und wird in entsprechenden Kennzahlen ausgedrückt (siehe unten).

Durch die genaue Einstellung und Kontrolle von Flüssigkeitstemperatur, Probenkonzentration, Filtermaschenweite und der Wasserqualität läuft die Einzelmessung jeweils in definierter Weise ab, was zu einer sehr guten Reproduzierbarkeit der Messergebnisse führt. Die Flüssigkeitstemperatur liegt bei der Untersuchung von Pflanzenschutz-Granulaten bevorzugt im Bereich von 5°C bis 30°C. Die Konzentration der Suspension (Gewichtsverhältnis Probe zu Flüssigkeit) liegt bevorzugt im Bereich von 0,05 % bis 5%, besonders bevorzugt im Bereich von 0,1 bis 1,0 %. Die Filtermaschenweite liegt bevorzugt im Bereich von 50 μm bis 1000 μm, besonders bevorzugt im Bereich von 150 μm bis 500 μm. Die Qualität des Wassers, insbesondere seine Härte, hat nur einen schwachen Einfluss auf die Messung der Dispergierbarkeit in Wasser. Sie kann deshalb beliebig gewählt werden, liegt jedoch für Vergleichszwecke bevorzugt im Bereich von 342 bis 500 ppm nach CIPAC MT 18 (CIPAC Handbook).

Charakteristische Merkmale der Messkurve des Durchflusses über die Zeit bei der Einzelmessung sind die Peaktiefe, Peakbreite, Peakfläche und eine eventuelle Abweichung der Messkurve von der 100 %-Linie am Ende des Messintervalls. Die Peaktiefe gibt an, wie durchlässig der Filterbelag bleibt, oder ob der Durchfluss im Extremfall bis auf Null reduziert wird.

Die Peakbreite gibt an, wie lange die Probe am Filterelement angestaut wird, ehe die Probe so weit erodiert ist, dass sie das Filterelement passieren kann. Die Peakfläche gibt an, wie viel Energie (Saugkraft der Pumpe mal Zeit) es bedarf, um die Probe zu erodieren bzw. wie viel "Widerstand" sie leistet. Die Abweichung der Messkurve von der 100 %-Linie des Durchflusses am Ende des Messintervalls, zeigt eine bleibende Verminderung des Durchflusses an, wenn zum Beispiel Hartkörner auf dem Filter abgelagert worden sind. Alle diese Größen verändern sich in systematischer Weise, wenn die zum Versuch verwendete Probenmenge geändert wird. Dies kann dazu ausgenutzt werden, die Messbedingungen zu optimieren.

Die Einzelmessung charakterisiert die Phase des Einschüttens des Produktes in den Spritztank einer Feldspritze bis zu der Stelle, wo die Granulate das erste Filter, z.B. das den Ansaugfilter erreichen. Wenn die Granulate nicht gut wasserdispergierbar sind, können sie sich dort lange Zeit anstauen, das Filter verstopfen und in der Folge davon kann auch die Pumpe beschädigt werden, weil der Durchfluss behindert ist.

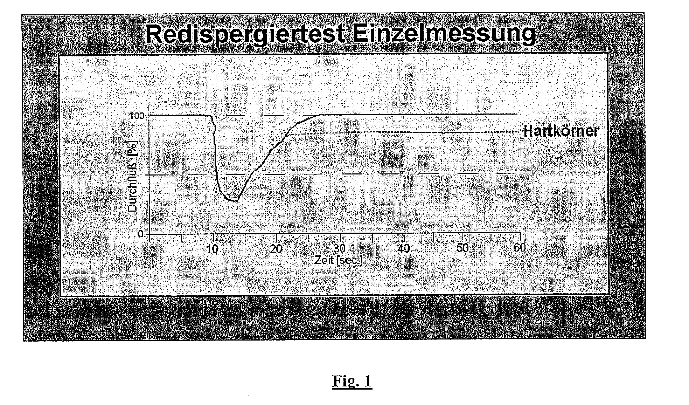

In Fig. 1 ist der schematische Messkurvenverlauf einer Einzelmessung dargestellt. Die Messkurve beginnt bei einem 100 %-Durchflusswert. Kurze Zeit nach Eingabe der Probe sinkt der Messwert auf ein Minimum ab und erreicht beim vorliegenden Fall einer gut dispergierbaren Probe bald wieder 100 % (durchgezogene Kurve in Fig. 1), weil alle Feststoffteilchen filtergängig geworden sind.

Eine bleibende Abweichung wird nur beobachtet, wenn sich Hartkörner in der Probe befinden (gepunktete Linie in Fig. 1). Wie groß der Hartkomanteil in diesem Fall ist, kann mit einer Aufbaumessung ermittelt werden, die auch kleinste Abweichungen noch sicher erfasst.

Es können mehrere Fälle unterschieden werden, die zu jeweils charakteristischen Kurvenverläufen bei der Einzelmessung führen:

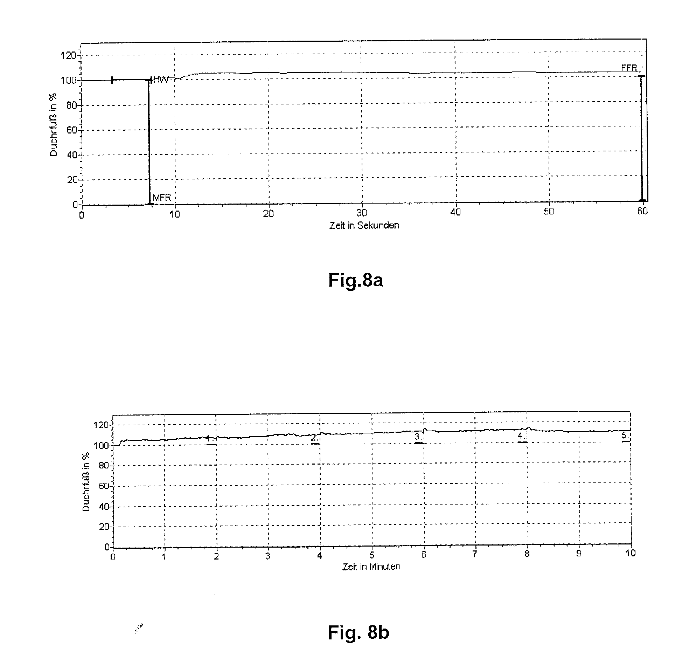

a.) die Proben sind vor Erreichen des Filterelementes bereits zerfallen oder kleiner als die gewählte Filtermaschenweite. Der Durchfluss ist dann nach der Probeneingabe gar nicht oder nur unbedeutend vermindert. In diesem Fall wird gar kein oder nur ein sehr kleiner Peak gemessen. Eine solche Messkurve ist in Fig. 8a wiedergegeben. Manche sprühgetrockneten Granulate verhalten sich so. Die Größe von sprühgetrockneten Granulaten ist oft sehr gering und sie können deshalb Filter mit großer Maschenweite ungehindert passieren. Auf Filtern mit geringerer Filtermaschenweite würden sie jedoch ebenfalls angestaut und es würde sich bei der Messung ein Peak ergeben; bei solchen Proben kann das Messergebnis stark von der gewählten Filtermaschenweite abhängen.

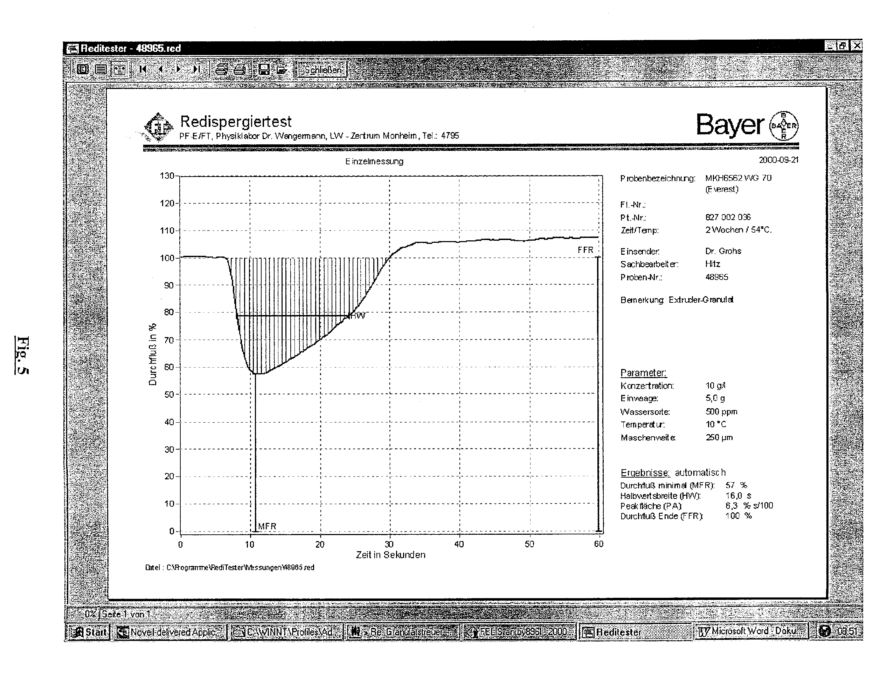

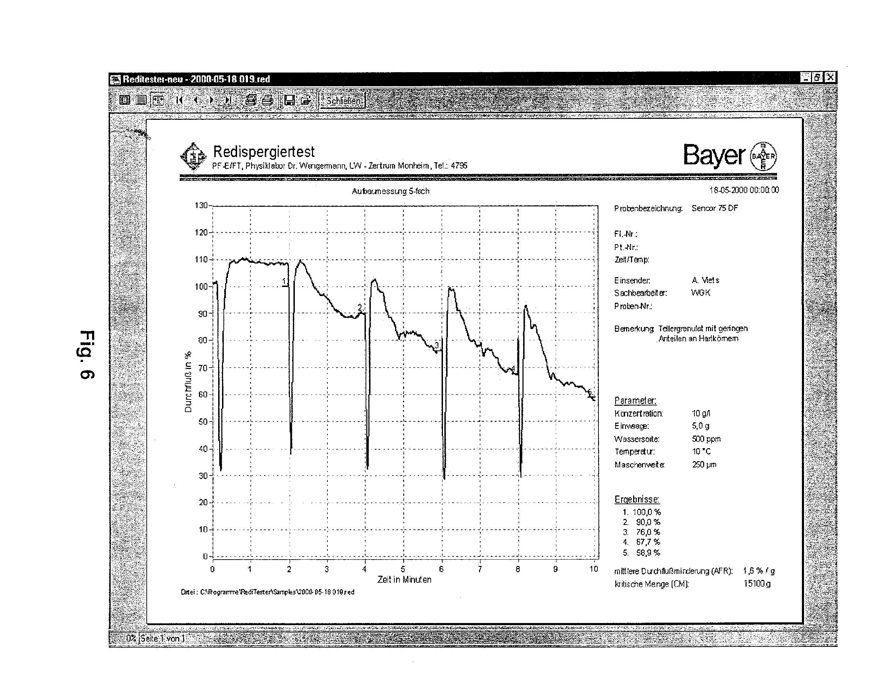

b.) die Proben stauen sich am Filter, werden aber zügig bis auf eine Größe erodiert, die kleiner als die Filtermaschenweite ist. In diesem Fall wird der Messwert für einige Sekunden absinken, jedoch nicht unbedingt bis auf 0% und in weniger als 1 min wieder 100 % erreichen. Eine solche Original-Messkurve ist in Fig. 5 wiedergegeben.

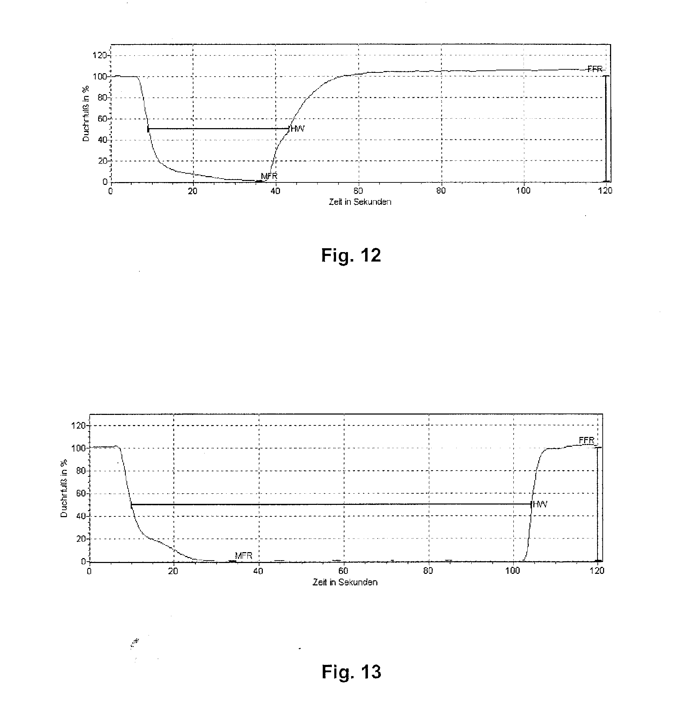

c.) die Proben quellen nur an, bilden aber zunächst eine kompakte, für Wasser mehr oder weniger undurchlässige Schicht. In diesem Fall ergibt sich ein großer und breiter Peak, der Durchfluss sinkt schnell auf Null, steigt aber nach einiger Zeit, manchmal erst nach einigen Minuten, wieder an und erreicht zuletzt wieder den Ausgangswert von 100 %. Eine solche Messkurve ist in Fig. 13 wiedergegeben.

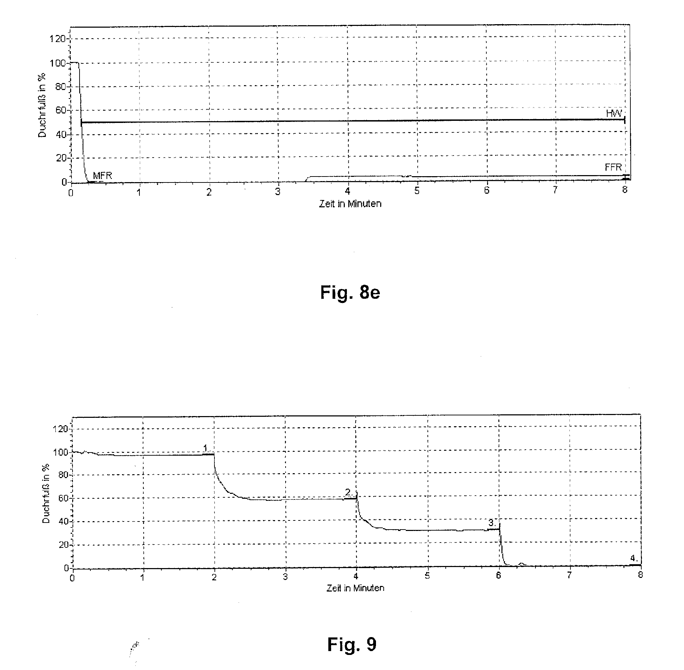

d.) die Proben zerfallen infolge eines hohen Hartkornanteiles gar nicht oder unvollständig. In diesem Fall ergibt sich ein sehr tiefer, sehr breiter Peak und der Durchfluss steigt bis zum Ende des Messintervalls nicht wieder auf 100 % an, sondern bewegt sich dauernd auf einem niedrigen Niveau oder beträgt sogar Null. Eine solche Messkurve ist in Fig. 8e wiedergegeben.

Die Kurvenform hängt in charakteristischer Weise von der Rezeptur und dem Herstellprozess der Feststoff-Formulierung und auch von späteren Einwirkungen auf das Produkt während einer Lagerung ab. Deshalb kann aus der Kurvenform auf mögliche Ursachen einer Qualitätsveränderung während der Produktion oder einer Lagerung geschlossen werden, die z.B. durch Einwirkung von Temperatur, Druck, Feuchte und eventuelle chemische Reaktionen eintreten kann.

Das zweite erfindungsgemäße Verfahren, die sogenannte Aufbaumessung, besteht in einem Nachweis von Hartkörnern in einer Dispersion, bei dem

a. eine Flüssigkeit im Kreislauf durch ein Aufgabegefäß für die Probe, ein bezüglich der durch die Pumpe vorgegebenen Strömungsrichtung stromabwärts hinter dem Aufgabegefäß angeordnetes Filterelement und einen Durchflussmesser gepumpt wird,

b. der Durchfluss durch den Durchflussmesser über eine vorgegebene Zeit gemessen wird während und nachdem eine Probe in das Aufgabegefäß gegeben wird bzw. wurde,

c. die Suspension aus dem Kreislauf abgelassen und neue Flüssigkeit zugeführt wird ohne einen eventuell vorhandenen Filterbelag zu entfernen,

d. die Schritte b, und c. mit weiteren Portionen derselben Proben mehrfach wiederholt werden,

e. charakteristische Merkmale der Messkurve des Durchflusses über die Zeit ausgewertet werden.

Vom Ablauf her ist die Aufbaumessung eine mehrfache, vorzugsweise eine 1- bis zu 20-fache, besonders bevorzugt eine 5- bis 10-fache Wiederholung einer Einzelmessung mit der entsprechend mehrfachen Menge an Probe, jedoch ohne Zwischenreinigung des Filterelementes. Bei einer Aufbaumessung sollten sowohl die Konzentration der Probe im Wasser, als auch die Filtermaschenweite dem Messproblem angepasst werden, da sonst das Ergebnis grob verfälscht sein kann. Auf dem Filter werden nur Hartkörner mit Abmessungen größer als die Filtermaschenweite abgelagert. Wenn also z. B. Hartkörner mit einer ganz bestimmten Größe vorliegen, kann durch Verkleinerung der Filtermaschenweite ein Messeffekt zustande kommen, während bei einer Vergrößerung die Hartkörner passieren können und kein Messeffekt zustand kommt.

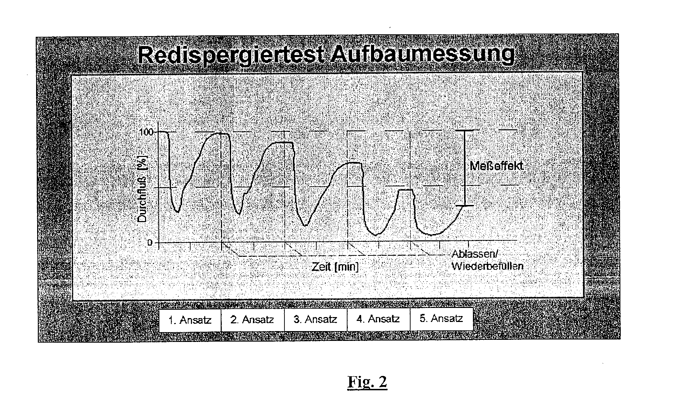

Bei einer Aufbaumessung ist die Messzeit pro Messintervall auf eine Dauer von 0,5 bis 5 min, bevorzugt im Bereich von 1 bis 3 min fest eingestellt. Nach dieser Zeitdauer wird die Suspension abgelassen, aber so, dass ein eventuell vorhandener Filterbelag erhalten bleibt und in seiner Struktur nicht gestört wird. Anschließend wird frische Flüssigkeit aufgefüllt und die zweite Portion der Probe in diesen zweiten Ansatz hineingegeben. Jeder einzelne Ansatz wird dabei mit der gleichen Konzentration, gleichen Flüssigkeitstemperatur, Pumpleistung und gegebenenfalls Wasserqualität hergestellt. In Fig. 2 ist der schematische Verlauf der Messkurve einer Aufbaumessung mit insgesamt 5 Ansätzen dargestellt. Die Probe hat einen gewissen Hartkornanteil. Charakteristisch ist das stufenweise Absinken der Messkurve mit jedem neuen Ansatz. Der Durchflusswert am Ende eines jeden Messintervalls wird als charakteristische Messgröße ausgewertet. Bei dem zweiten erfindungsgemäßen Messverfahren kommt es nicht auf die Kurvenform der Peaks an, sondern nur auf die von Hartkörnern verursachte zunehmende, bleibende Filterbelegung, d.h. das stufenförmige Absinken der Messkurve am Ende jedes Messintervalls.

Die Aufbaumessung bildet die Phase beim Versprühen einer schon im Spritztank dispergierten Formulierung ab, bei der die Suspension weitere Filter wie einen Druckfilter und Düsenfilter mit oft kleiner Filtermaschenweite passieren muss. Es kann mit der Aufbaumessung die Menge an Probe ermittelt werden, die nötig ist, diese Filter völlig zu blockieren. Dabei kommt es nicht auf die Dynamik des Zerfalls an, die mit dem ersten erfindungsgemäßen Verfahren erfasst wird.

Die Aufbaumessung weist eine hohe Empfindlichkeit auf relativ wenige Hartkörner auf, bzw. ist in der Lage, derartige Verunreinigungen in der Probe, auch solche in prozentual geringen Mengen, zu detektieren. Dies wird dadurch erreicht, dass nacheinander mehrere Portionen derselben Probe zugeführt werden, in denen im Mittel entsprechend mehr Hartkörner als bei einer einzelnen Probe enthalten sind. Der Ablauf der Messung gleicht demjenigen beim wiederholten Ausspritzen einer Feldspritze, die nicht nach jedem Ansatz gereinigt wird. Es wird immer wieder neue Flüssigkeit und eine neue Probenportion eingefüllt, so dass sich der Filterbelag allmählich verstärkt, während die Konzentration der Probe in der Flüssigkeit praxisgerecht niedrig bleibt. Da eine Zwischenreinigung des Filterelementes nicht stattfindet, können sich auch geringste Gehalte an Hartkörnern in der Probe zu einem massiven Filterbelag aufbauen, der gut detektiert werden kann.

Ziel der Aufbaumessung ist es also, den oft schwachen Belag bei einer Einzelmessung durch Wiederholung zu verstärken und damit besser messbar zu machen. Mit Hilfe einer einfachen Formel kann hochgerechnet werden, wann die größerflächigen Filter in einem Originalgerät, z.B. in einer landwirtschaftlichen Feldspritze, einen gleichartigen Belag aufweisen würden. Dazu wird zunächst ermittelt, welche Filterfläche im entsprechenden Originalgerät vorhanden ist, und das Verhältnis der Filterfläche des Originalgerätes zur Filterfläche, die in der Aufbaumessung verwendet wird, berechnet. Dieses Verhältnis wird als "Flächenrelation" bezeichnet.

Aus den Mittelwerten der Differenzen der Durchflusswerte am Ende eines jeden Messintervalls wird die mittlere Durchflussminderung ermittelt und mit Average Flow Reduction (AFR) bezeichnet:

$$\text{AFR} = \frac{\text{Mittelwert der Differenzen der Durchflussminderung je Messintervall [\%]}}{\text{Probenmenge [g]}} \quad [\%/g]$$

Die Stufen in den einzelnen Messintervallen sind nur im Idealfall, wenn die Hartkörrier gleichmäßig in der Probe verteilt wären, gleich groß und werden für die AFR deshalb gemittelt. Außerdem wird die AFR auf die Probenmenge normiert. Für die Berechnung der Kennzahl AFR wird angenommen, dass die Hartkörner in der Probe gleichmäßig (homogen) verteilt sind, nämlich so dass in jeder Probenportion die gleiche Menge enthalten ist. Auch wenn dies nicht immer zutrifft, ist die Mittelung sinnvoll, weil eine blockierenden Schicht auch dann zustande kommt, wenn einmal weniger, dann aber wieder mehr Hartkörner abgelagert werden, wobei es auf den einzelnen Schritt nicht ankommt, sondern auf die insgesamt abgelagerte Menge.

Wenn der Gehalt in der Probe generell sehr niedrig ist, so ergibt sich pro Messintervall nur eine kleine Stufe. Dieser geringe Effekt kann durch eine Erhöhung der Probenmenge verstärkt werden, was allerdings eine erhöhte Konzentration der Probe in der Flüssigkeit zur Folge hat. Dies stört meist nicht, erhöht aber die Messgenauigkeit bei sehr kleinen Effekten beträchtlich. AFR = 1 bedeutet der Durchfluss sinkt mit 1 g Probenportion pro Messintervall in jedem Messintervall um 1% ab. Um diesen Messeffekt zu verstärken, könnte die Menge z.B. auf 5 g erhöht werden. Dann würde der Durchfluss mit 5 g Probe pro Messintervall in jedem Messintervall um 5 % absinken.

Unterschiedliche Probenmengen ergeben also den gleichen AFR-Wert, aber unterschiedlich große Messeffekte. Im Einzelfall wird ein Kompromiss zwischen der Größe des Messsignals und der einzusetzenden Probenmenge angestrebt.

Für AFR = 1 wären z. B. 5 g Probenmenge pro Messintervall optimal. Bei einer anderen Probe, die ebenfalls mit 5 g eingesetzt wird aber ein AFR = 10 ergibt, bedeutet es, dass der Durchfluss pro Messintervall um 10 % absinkt. Dies ist ein relativ starker Messeffekt, so dass hier auch weniger als 5 g Probenmenge (pro Messintervall) für einen ausreichenden Messeffekt genügen würden.

Die kritische Masse ist ein Zahlenwert, der eine Obergrenze für die störungsfrei auszubrigende Produktmenge mit einem Originalgerät angibt. Mit Hilfe der Flächenrelation kann aus der AFR formal auf eine "kritische Masse" in einem Originalgerät hochgerechnet werden. Die kritische Masse (Critical Mass =CM) berechnet sich nach:

$$CM\ [g] = \text{Flächenrelation} / (AFR[\%/g] / \text{Störungsbedeckung}\ [\%])$$

$$= \text{Flächenrelation} * \text{Störungsbedeckung}\ [\%] / AFR[\%/g]$$

Als Flächenrelation wird ein bestimmter Faktor angenommen, der bei der Geometrie der erfindungsgemäßen Anordnung und bei den angenommenen Verhältnissen einer durchschnittlichen Feldspritze gilt. Dieser Faktor muss bei wesentlich anderen Feldspritzen oder bei einer Veränderung der Filterfläche im Filterelement entsprechend angepasst werden.

Die Störungsbedeckung ist diejenige Filterbedeckung, ab der in der Praxis sichtbare Störungen auftreten. Sie liegt normalerweise im Bereich von 80 bis 100 % der Filterfläche. Bei der Berechnung der kritischen Masse kann vereinfachend angenommen werden, dass die Bedeckung genau 100 % beträgt. Als Sonderfall ist anzusehen, wenn AFR = 0 %/g gemessen wurde. Dann kann CM nicht mehr berechnet werden, weil bei der Division durch Null das Ergebnis Unendlich herauskommt. Praktisch hat dies jedoch zu bedeuten, dass bei AFR = 0 %/g tatsächlich beliebig große Produktmengen ohne Filterbedeckung verarbeitet werden können.

Die Lösung der erfindungsgemäßen Aufgabe besteht weiterhin in einer Vorrichtung zur Durchführung der erfindungsgemäßen Verfahren.

Die erfindungsgemäße Vorrichtung enthält eine elektrisch angetriebene Pumpe, einen Durchflussmesser, ein Aufgabegefäß für die Probe und ein Filterelement. Diese Bauteile sind über einen Flüssigkeitskreislauf miteinander verbunden, wobei das Filterelement bezüglich der durch die Pumpe vorgegebenen Strömungsrichtung stromabwärts hinter dem Aufgabegefäß angeordnet ist.

Die Flüssigkeit ist bevorzugt Wasser, kann aber auch eine in der Landwirtschaft verwendete Düngerlösung oder eine andere Flüssigkeit sein.

Das Aufgabegefäß hat bevorzugt einen kreisförmigen Querschnitt und ist im oberen Teil zylindrisch und im unteren Teil kegelförmig geformt und weist bevorzugt eine tangentiale Zuführung und einen zentralen Ablauf für die Flüssigkeit auf. Die Flüssigkeit rotiert in einem Messgefäß dieser speziellen Ausführungsform um eine senkrechte Achse. Nach dem Anlaufen der Pumpe stellt sich wegen der speziellen Geometrie des Aufgabegefäßes die Rotation von selbst ein. Dabei bildet sich in der Mitte des Aufgabegefäßes eine Trombe aus, die durch Einregeln auf einen bestimmten Durchflusswert einige cm Tiefe erreichen sollte. Durch diese spezielle Strömung wird die Probe zuerst gleichmäßig im Wasser verteilt und danach schnell in das Filterelement gesaugt.

Das Aufgabegefäß kann doppelwandig sein, so dass zwischen den beiden Wänden des Aufgabegefäßes Kühl- oder Heizflüssigkeit zur Temperierung der im Aufgabegefäß befindlichen Flüssigkeit zirkulieren kann. Das Aufgabegefäß kann auch einen Überlauf aufweisen, damit im Störfall das Aufgabegefäß nicht unkontrolliert überläuft, sondern die Suspension in das vorgesehene Abwassergefäß fließen kann.

Das Filterelement ist bevorzugt aus durchsichtigem Kunststoff, damit der Aufbau eines Filterbelages zusätzlich auch optisch beobachtet werden kann. Das Filtergewebe hat bevorzugt einen Durchmesser im Bereich von 2 bis 20 mm, besonders bevorzugt im Bereich von 5 bis 10 mm und die Maschenweite des Filtergewebes liegt bevorzugt im Bereich von 50 bis 1000 µm, besonders bevorzugt im Bereich von 150 bis 500 µm.

Weiterhin kann die erfindungsgemäße Vorrichtung ein Vorratsgefäß für die Flüssigkeit enthalten, aus dem das Aufgabegefäß mit Flüssigkeit befüllt werden kann, besonders wenn Wasser besonderer Qualität oder eine andere Flüssigkeit als Wasser verwendet werden soll. Das Vorratsgefäß kann einen Thermostaten aufweisen, der die Temperatur der Flüssigkeit im Vorratsgefäß in einem Temperaturbereich von 5 bis 30°C hält.

Der Flüssigkeitskreislauf kann einen Auslaß für den Ablauf der Flüssigkeit aufweisen.

Die erfindungsgemäße Vorrichtung kann eine Probezufuhrvorrichtung enthalten, die eine Greifereinheit und einen oder mehrere Probenbevorratungsbehälter in einer Lagervorrichtung aufweist. Bevorzugt sind die Probenbevorratungsbehälter Einwegschalen. Die Lagervorrichtung ist bevorzugt ein Rack, das über einen Linearantrieb verschoben werden kann. Die Greifereinheit weist bevorzugt einen Greifer für die Probenbevorratungsbehälter auf, einen Pneumatikzylinder, um die Probenbevorratungsbehälter über das Aufgabegefäß zu bringen und eine Drehantrieb, um die Probenbevorratungsbehälter über dem Messgefäß auszuleeren.

Die erfindungsgemäße Vorrichtung kann weiterhin eine Reinigungsvorrichtung für das Aufgabegefäß enthalten. Bevorzugt weist die Reinigungsvorrichtung eine Düse auf, die durch einen Pneumatikzylinder linear bewegt werden kann, sowie ein Ventil zur Steuerung der Zufuhr der Reinigungsflüssigkeit.

Das dynamische Zerfallen der Proben auf dem Weg vom Aufgabegefäß zum Filterelement findet in der erfindungsgemäßen Vorrichtung auf standardisierte Weise statt. Die Probe wird in kleine Vorratsgefäße eingewogen und aus diesen gleichmäßig und schnell in die Flüssigkeit im Aufgabegefäß gegeben. Vom Aufgabegefäß wird die Probe zusammen mit der Flüssigkeit mit Hilfe der Pumpe zum Filterelement gesaugt. Die bis dahin noch nicht zerfallenen Teile der Probe werden dort angestaut. Der Durchfluss fällt in diesem Moment ab und erreicht erst wieder seinen Ausgangswert, wenn alle Probenteile nach Erosion das Filter passiert haben. Da die Konzentration im allgemeinen gering ist und selten 1 % übersteigt, ist das Fließverhalten der Suspension ähnlich derjenigen der reinen Flüssigkeit (z.B. Wasser), so dass der anfängliche 100 %-Wert des Durchflusses nach vollständigem Zerfall der Proben meistens wieder erreicht wird, manchmal auch leicht überschritten wird. Der Teil der Suspension, der das Filterelement passiert, wird über Pumpe und Durchflussmesser im Kreislauf wieder in das Aufgabegefäß gepumpt. Dies geschieht solange bis die vorgesehene Messzeit vorüber ist.

Nach den erfindungsgemäßen Verfahren können die sich bei der Dispergierung von Proben in Flüssigkeiten überlagernden Vorgänge einzeln und unabhängig voneinander gemessen werden.

Die erfindungsgemäßen Verfahren sind standardisierte Tests, die auf unterschiedliche Praxisbedingungen durch Variation der einstellbaren Parameter (Wasserqualität und -temperatur, Filtermaschenweite, Konzentration der Probe in der Flüssigkeit) flexibel angepaßt werden können.

Die anschaulichen, leicht interpretierbaren Messkurven erlauben unmittelbare Schlussfolgerungen auf die Ursachen des Kurvenverlaufs, so dass eventuell notwendige Änderungen der Rezeptur oder des Herstellverfahrens von Formulierungen veranlasst werden können. Die Einzelmessung eignet sich auch dazu, durch geeignete Probenpräparation vor der Messung - z.B. durch Nachtrocknen der Probe -, besondere Fragestellungen zu beantworten. Solche Einflüsse bewirken charakteristische Veränderungen im Kurvenverlauf, die Rückschlüsse auf die Ursachen erlauben.

Die gute Reproduzierbarkeit der Messergebnisse und die hohe Empfindlichkeit erlauben es, kleinste Probenveränderungen frühzeitig zu erkennen. Dies ist ein Vorteil bei der Analyse von gelagerten Proben, weil bereits sehr früh Aussagen über das Verhalten der Proben gemacht werden können und somit Entwicklungszeit gespart wird.

Die Durchführung der erfindungsgemäßen Verfahren ist sehr einfach. Die Probenpräparation beschränkt sich normalerweise auf das Abwiegen. Das Ergebnis liegt nach wenigen Minuten vor. Deshalb sind die erfindungsgemäßen Verfahren gleichermaßen bei hohem Probenaufkommen im Labor als auch im Betrieb zur Produktionsüberwachung einsetzbar.

Die Aufbaumessung erfasst das eventuelle Vorhandensein von Hartkörnern. Ebenso liefert die Aufbaumessung Informationen über die Verteilung von Hartkörnern in der Gesamtheit der Probe, d.h. über deren Homogenität.

Bei der Aufbaumessung kann durch die Verwendung kleinerer Filterflächen die Empfindlichkeit gesteigert werden.

**Figuren und Beispiele**

Es zeigen

Fig. 1    Schematischer Messkurvenverlauf bei einer Einzelmessung
Fig. 2    Schematischer Messkurvenverlauf bei einer Aufbaumessung
Fig. 3    Ausführungsbeispiel der erfindungsgemäßen Vorrichtung
Fig. 4    Filterelement
Fig. 5    Messkurve einer Einzelmessung an Granulat WG 70
Fig. 6    Messkurve einer 5er Aufbaumessung

Fig. 7a    Aufbaumessung einer Probe mit höherem Hartkornanteil und einer Einwaage von 0,5 g (1 g/l) pro Intervall.

Fig. 7b    Aufbaumessung einer Probe mit höherem Hartkornanteil und einer Einwaage von 1 g (2 g/l) pro Intervall.

Fig. 7c    Aufbaumessung einer Probe mit höherem Hartkornanteil und einer Einwaage von 1,5 g (3 g/l) pro Intervall.

Fig. 8a    Einzelmessung Muster 1, 500 μm Filter.

Fig. 8b    Aufbaumessung Muster 1, 500 μm Filter.

Fig. 8c    Einzelmessung Muster 1, 1 g Probe, 315 μm Filter.

Fig. 8d    Einzelmessung Muster 1, 1,5 g Probe, 315 μm Filter.

Fig. 8e    Einzelmessung Muster 1, 2,5 g Probe 315 μm Filter.

Fig. 9    Aufbaumessung Muster 1, 4 mal 0,5 g Probe (= 2 g insgesamt), 315 μm Filter.

Fig. 10    Einzelmessung Muster 2.

Fig. 11    Einzelmessung Muster 3.

Fig. 12    Einzelmessung Muster 4, 20 °C.

Fig. 13    Einzelmessung Muster 4, 10 °C.

Fig. 1 zeigt schematisch den Messkurvenverlauf bei einer Einzelmessung. Fig. 2 zeigt schematisch den Messkurvenverlauf bei einer Aufbaumessung.

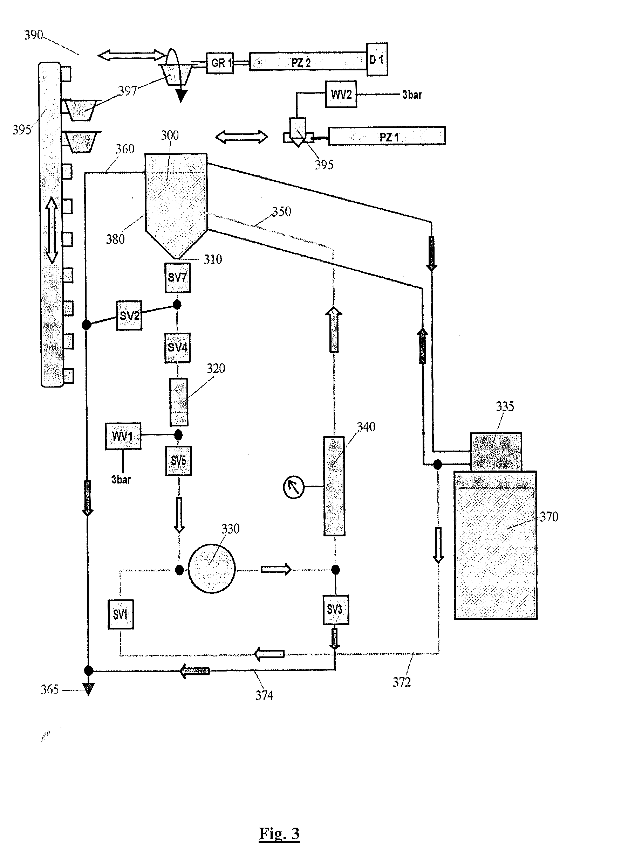

Fig. 3 zeigt ein Ausführungsbeispiel für die erfindungsgemäße Vorrichtung.

Das Messgefäß 300, das Filterelement 320, die Pumpe 330 und der Durchflussmesser 340 sind in einem Wasserkreislauf hintereinander angeordnet. Der Wasserkreislauf enthält außerdem die Ventile SV7, SV4 und SV5. Durch die Pumpe 330 wird im Messbetrieb Wasser in Richtung der Pfeile in Fig. 3 durch den Kreislauf gepumpt.

Das Messgefäß 300 mit einem Volumen um 0,5 Liter weist einen Ablauf 310 nach unten über das Filterelement 320 zur Pumpe 330 und einen oberen Rücklauf 350 sowie einen noch etwas höher angebrachten seitlichen Überlauf 360 auf. Das Messgefäß 300 kann aus dem Reservoir 370 des Thermostaten mit vortemperiertem Wasser mit Hilfe der Pumpe 335, die Leitung 372 und das Ventil SV1 gefüllt werden. Das Reservoir 370 hält selbsttätig sein Niveau bzw. wird automatisch nachgefüllt. Zur Temperierung während der Messung dient der doppelwandige Mantel 380 des Messgefäßes 300, der ebenfalls von Wasser aus dem Reservoir 370 des Thermostaten durchströmt wird. Der Ablauf des Wassers aus dem Wasserkreislauf kann über das Ventil SV3 und Leitung 374 in den Abfall 365 erfolgen.

Die Pumpe 330 ist bevorzugt eine Flügelradpumpe und wird elektrisch angetrieben. Ihre Leistungscharakteristik (Kennlinie) ist so, dass sie bei maximal möglicher Förderung, d.h. bei nicht bedecktem Filter 320, bis zu 2 Liter pro Minute fördert und dabei einen Saug-Unterdruck von weniger als 0,1 bar erzeugt, jedoch bei einem Durchfluss Null, d. h. bei blockierten Filter 320, einen maximalen Saug-Unterdruck von etwa 0,5 bar vorzugsweise jedoch nur von 0,2 bar erreicht. Der Durchfluss wird wesentlich mitbestimmt vom engsten Querschnitt im Kreislauf, das kurze Rohr des Durchflussmessers 340 mit einem inneren Durchmesser von 2 bis 3 mm, vorzugsweise 2,5 mm. Die Pumpe 330 wird bevorzugt so betrieben, dass zu Beginn der Messung der gewünschte Durchfluss durch Veränderung der Versorgungsspannung für die Pumpe 330 eingeregelt wird, vorzugsweise zwischen 0,6 und 1,4 Liter pro Minute, besonders bevorzugt zwischen 0,8 und 1,2 Liter pro Minute. Bei einem solchen Durchfluss entsteht in dem Messgefäß 300 mit tangentialem Rücklauf 350 eine kleine Trombe von einigen cm Tiefe im Wasser, die aber nicht so tief ist, dass Luft in das Filterelement 320 gelangen kann. Während der Messung wird die Versorgungsspannung für die Pumpe 330 konstant gehalten.

Der magnetisch-induktive Durchflussmesser 340 misst den Volumenstrom unabhängig von der Art der eingegebenen Probe. Das bekannte Messprinzip verlangt lediglich eine geringe Mindestleitfähigkeit der Suspension, die praktisch immer gegeben ist, weil einerseits das Wasser bereits genügend Ionen enthält und damit eine gewisse Leitfähigkeit aufweist und weil auch die Granulate Bestandteile enthalten, die die Leitfähigkeit erhöhen. Der Messwert ist aber nicht abhängig von der Größe der Leitfähigkeit, sofern diese nur einen Mindestwert überschreitet.

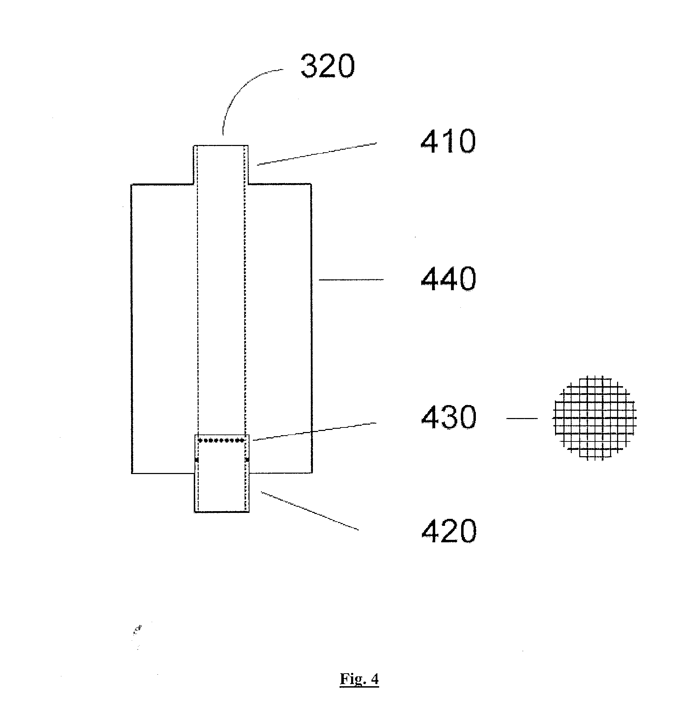

In Fig. 4 ist schematisch ein Filterelement 320 dargestellt, das in der erfindungsgemäßen Vorrichtung zum Einsatz kommen kann. Der Körper 440 des Filterelements 320 besteht aus durchsichtigem Kunststoff und weist an seinen gegenüberliegenden Enden die beiden Schlauchanschlüsse 410 und 420 auf. Der zylindrische, innere Teil des Filterelementes 320 bestimmt mit seiner speziellen Geometrie die Messergebnisse mit. Das Filtergewebe 430 hat einen Durchmesser von 7 mm. Der Innendurchmesser des Filterelementes beträgt ebenfalls 7 mm, seine Länge 60 mm. Das Filtergewebe wird vorzugsweise mit den Filtermaschenweiten 150, 250, 315 oder 500 μm eingesetzt. Das Filtergewebe und eventuell darauf abgelagerte Filterbeläge können zur optischen oder chemischen Analyse entnommen werden.

Die Probenzufuhr kann mittels einer pneumatischen Greifereinheit 390, die einen Greifer GR1, einen Drehantrieb D1 und einen Pneumatikzylinder PZ2 und aufweist, erfolgen (Fig. 3). Der Greifer GR1 zieht aus einem Rack 395 mit 10 Ablagestellen die Einweg-Schalen 397 mit den Proben nacheinander heraus, bringt sie durch die Linearbewegung des Pneumatikzylinders PZ2 über das Messgefäß 300 und entleert sie in dieses durch Drehung mit dem Drehantrieb D1. Die entleerten Schalen 397 werden wieder im Rack 395 abgelegt. Das Rack 395 selbst wird mit einem elektrischen Linearantrieb vertikal verschoben, wodurch alle 10 Positionen einzeln angefahren werden können. Das Bestücken des Racks 395 erfolgt zuvor von Hand, ebenso das Einwiegen der Proben in die kleinen Einweg-Schalen 397.

Ein Computer steuert alle Abläufe und überträgt die Steuersignale mit Hilfe eines modernen Feldbussystems in den elektro-mechanisch / pneumatischen Geräteteil. Mit dem Computer werden auch die Daten der Proben und die Werte der Parameter verwaltet und gespeichert, die Varianten des Messprogramms ausgewählt, die Messung gestartet und die Ergebnisse auf Bildschirm und Papier ausgegeben.

Der zeitlich und ereignisabhängig gesteuerte Ablauf aller Einzelschritte kann durch pneumatisch betätigte Schlauchventile (SV1...SV7) und Wasserventile (WV1, WV2) realisiert werden wie in Fig. 3 dargestellt.

In einer Ausführungsform der Erfindung erfolgt nach jeder Messung automatisch ein Reinigungsvorgang mit sauberem Wasser. Zuerst wird die Suspension durch Öffnen der Ventile SV7, SV2, SV4, SV5 und SV3 (Fig. 3) abgelassen. Danach wird mit der Sprühdüse 395, die durch den Pneumatikzylinder PZ1 von einer anderen Position in eine Position über dem Messgefäß 300 gebracht werden kann, die Innenwand des Messgefäßes 300 abgespült. Sodann wird SV2 und SV3 geschlossen und das Messgefäß 300 einmal ganz aufgefüllt, wobei die Pumpe 330 das Wasser in Pfeilrichtung zirkulieren lässt. Die Wassermenge aus der Sprühdüse 395 wird über das Wasserventil WV2 gesteuert. Zuletzt wird SV2 und SV3 wieder geöffnet und die Pumpe 330 abgestellt, so dass das Wasser wieder abfließen kann.

Das Rückspülen des Filters 320 ist ein separater Schritt, bei dem Wasser mit Druck über das Ventil WV1 zum Filterelement gelangt. Dazu wird WV1 kurzzeitig geöffnet, während SV5 und SV7 geschlossen bleiben und SV2 und SV4 geöffnet werden. Dadurch kann das Druckwasser über den seitlichen Ablauf 365 ablaufen und die Filterbeläge dabei entfernen.

### Beispiele

Die nachfolgenden Beispiele geben einen Überblick über häufig auftretende Phänomene bei Messungen nach den erfindungsgemäßen Verfahren.

Soweit nicht anders angegeben erfolgten alle Messungen aus den Fig. 5 bis Fig. 13 mit den Standard-Parameterwerten:

> Konzentration 5 g/l,
> Wassersorte 500 ppm,
> Temperatur 10°C,
> Filtermaschenweite 250 μm.

Fig. 5 zeigt ein Beispiel für eine Messkurve einer Einzelmessung an einem Granulat mit der Bezeichnung WG 70 enthaltend den Wirkstoff MKH 6562. Rechts oben neben der Messkurve werden allgemeine Angaben zur Probe aufgelistet. Rechts in der Mitte sind die für diese Messung gewählten Werte der Parameter angegeben:

> Konzentration 10 g/l,
> Einwaage (der Probe) 5,0 g,
> Wassersorte 500 ppm,
> Temperatur 10°C,
> Maschenweite (des Filters) 250 μm.

Rechts unten sind die Messergebnisse aufgelistet. Es wurden in dieser Einzelmessung bestimmt:

> Peaktiefe oder auch minimaler Durchfluss in % des Durchflusses am Beginn des Messintervalls (MFR) mit 57%,
> Halbwertsbreite (HW) mit 16,0 s,
> Peakfläche (PA) mit 6,3 %s/100,

Durchfluss am Ende des Messintervalls in % des Durchflusses am Beginn des Messintervalls (FFR) mit 100%. Dabei wird der tatsächlich mit über 100 % gemessene Wert auf 100 % gesetzt.

Obwohl während der Messung die Spannung an der Pumpe konstant gehalten wird, tritt gelegentlich ein Phänomen auf, das als mangelhafte Konstanz der Pumpleistung missverstanden werden könnte. Die Messkurve kann - abhängig von der Zusammensetzung der Probe - nach Abklingen des eigentlichen Peaks manchmal etwas <u>über</u> den anfänglich eingeregelten 100 %-Wert ansteigen. Das liegt an geringfügig verbesserten Fließ- bzw. Pumpeigenschaften der Suspension gegenüber reinem Wasser. Solche Effekte sind bekannt, sie werden durch Hilfsmittel in der Formulierung (Dispergiermittel, Emulgatoren oder Polymere) verursacht, sind aber für den eigentlich interessierenden Dispersionsvorgang ohne Bedeutung. Bei der Auswertung der Messkurven werden deshalb Messwerte <u>über</u> 100 % auf 100 % gesetzt und die Kennzahlen entsprechend berechnet (siehe "FFR" in Fig. 5).

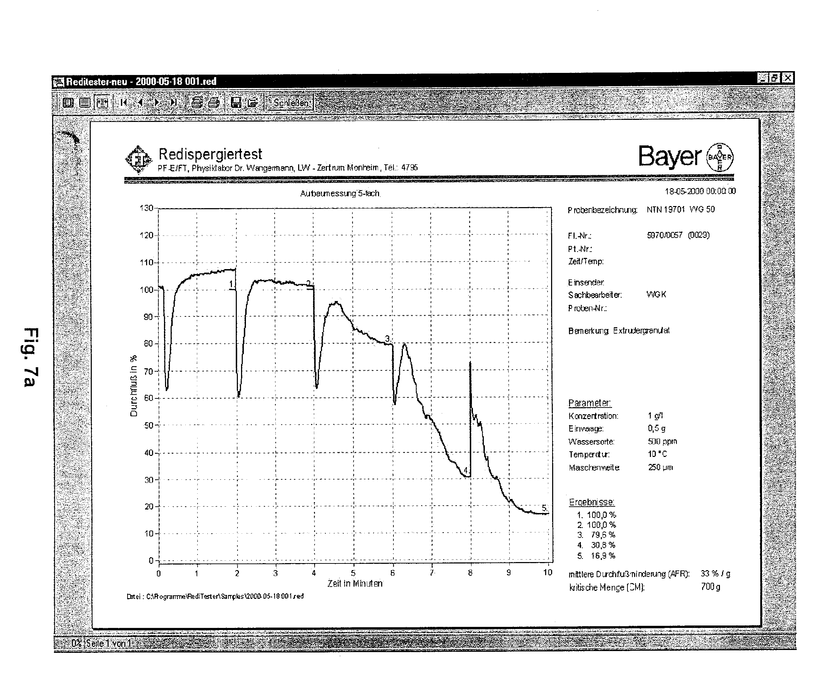

In Fig. 6 wird ein Beispiel für eine 5-er Aufbaumessung mit relativ großer Probenmenge (5 g Einwaage pro Messintervall, entsprechend einer Konzentration von 10 g/l) gezeigt. Die mit den Ziffern 1 bis 5 gekennzeichneten Stufen sind nicht genau gleich hoch, weil die Hartkörner in der Probe nicht ganz homogen verteilt sind. Hier ist eine weitere Besonderheit zu beachten. Beim 1. Messintervall reichen die wenigen Hartkörner der ersten Probenportion noch nicht für eine messbare Verminderung des Durchflusses aus, so dass im ersten Intervall noch kein Messeffekt festgestellt wird. Dies liegt daran, dass der Durchfluss im wesentlichen von der engsten Stelle im System (das ist bei der bevorzugten geometrischen Auslegung der Durchflussmesser) bestimmt wird, weil das Filtergewebe flächenmäßig größer ist und anfangs nur gering bedeckt ist. Erst wenn die Filterbedeckung etwas stärker wird, was meist bereits bei der zweiten Probenportion der Fall ist, stellen sich im Folgenden nahezu gleich große Stufen bzw. Messeffekte ein.

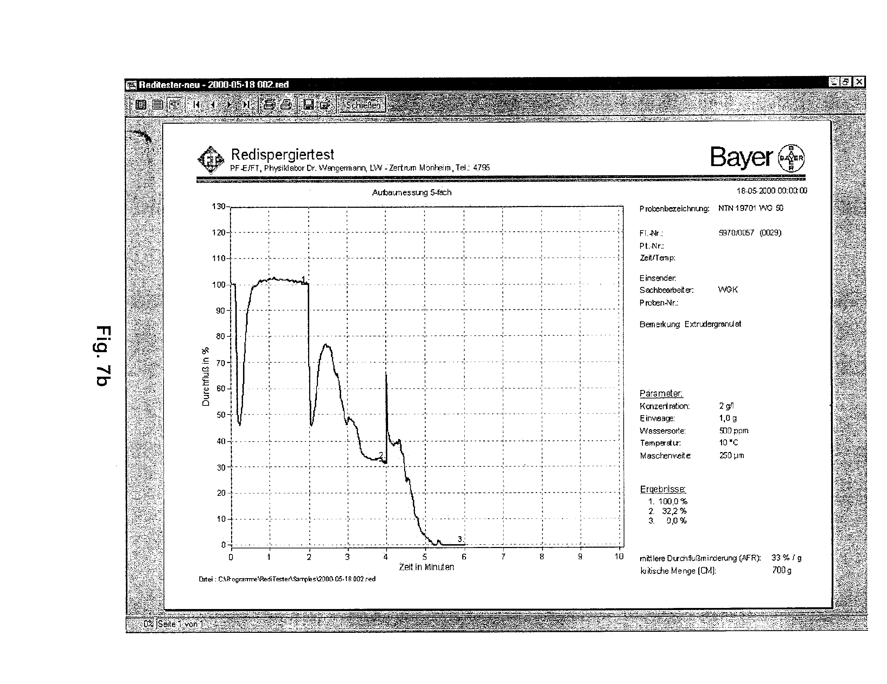

In den Fig. 7a bis 7c wird am Beispiel einer Probe mit der Bezeichnung WG 50, einem Extrudergranulat mit einem erhöhten Hartkomanteil (AFR = 33 %/g) gezeigt, wie die Messkurven der Aufbaumessung bei verschiedenen Probenmengen aussehen. Es lässt sich hierbei nicht vermeiden, dass die Konzentration der Suspension jeweils verschieden ist, dieser Umstand stört jedoch bei der Aufbaumessung normalerweise auch nicht.

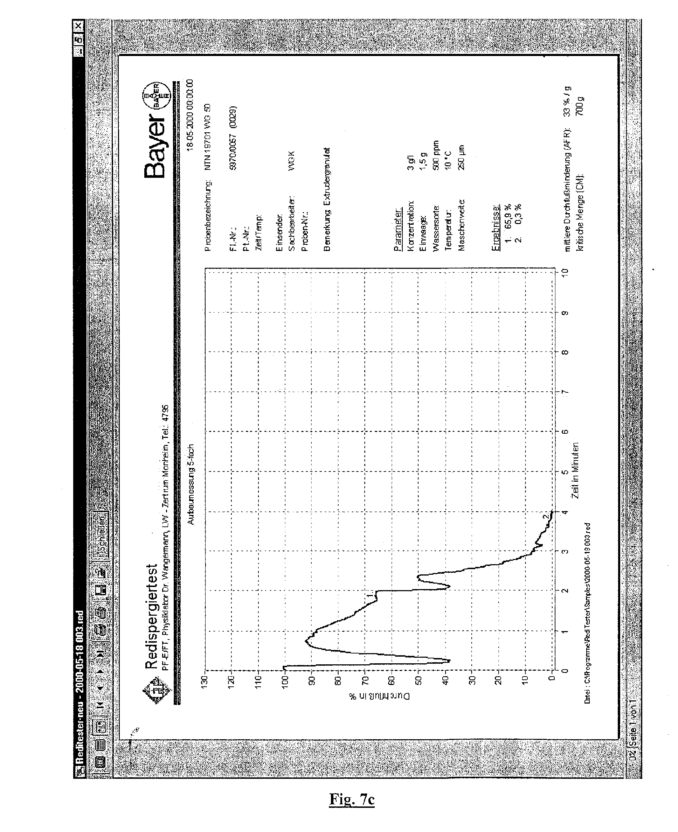

Die Figuren 7a, 7b und 7c zeigen jeweils eine 5-er Serie mit Probenmengen von 0,5 g (1 g/l) bzw. 1 g (2 g/l) bzw. 1,5 g (3 g/l) pro Messintervall. Mit Vergrößerung der Probenmenge werden erwartungsgemäß die von Hartkömern verursachten Stufen ebenfalls größer. Am Beispiel der Fig. 7b (1 g, 2 g/l) kann die Berechnung der mittleren Durchflussminderung (AFR) am einfachsten nachvollzogen werden. Der Durchfluss geht in drei Schritten (in der Kurve mit 1, 2 und 3 bezeichnet) von 100 % auf 0 % zurück, im Mittel also um 33 %. AFR berechnet sich dann einfach aus diesem Mittelwert von 33%, geteilt durch die eingewogene Probenmenge in Gramm (in diesem Fall 1 g). Bei den beiden in den Fig. 7a und 7c dargestellten Messungen werden kleinere bzw. größere Stufen in entsprechend mehr bzw. weniger Intervallen gefunden, aus denen sich der gleiche AFR-Wert von 33%/g berechnet.

Das Beispiel zeigt, dass die theoretische Überlegung, dass der AFR-Wert von der eingesetzten Masse unabhängig ist, bei der Messung bestätigt wird.

Gemäß der bereits angegebenen Formel zur Berechung von CM:

$$CM\ [g] = \text{Flächenrelation} / (AFR[\%/g] / \text{Störungsbedeckung } [\%])$$

mit Flächenrelation = 250; AFR = 33 %/g; Störungsbedeckung = 100% ergibt sich CM = 250 / (33 %/g /100 %) = 757

Ein so berechneter Wert wird rein aus Gründen der Zweckmäßigkeit und Vereinfachung auf den nächst niedrigeren 100-er Wert - das sind hier 700 - abgerundet, so wie es in Fig. 7 a, 7b und 7c angegeben ist.

Bei den folgenden Messkurven-Beispielen wurde jeweils zur Vereinfachung die Legende und der Rahmen weggelassen und nur der eigentliche Kurvenverlauf in einem Koordinatensystem, bei dem die x-Achse die Zeit und die y-Achse der %-Wert (= Messwert) ist, dargestellt.

Fig. 8a zeigt den Kurvenverlauf einer Einzelmessung einer im folgenden als Muster 1 bezeichneten Probe. In der Messkurve der Einzelmessung von Muster 1 wird kein Peak gefunden (MFR = 100 %), d. h. es zerfällt sehr schnell und anscheinend vollständig. Als besondere Parameter wurden gewählt: Einwaage 2,5 g Probe und 500 μm Filter. Das Ergebnis ist MFR = 100 %, FFR = 100 %.

Eine Aufbaumessung (Fig. 8b) an derselben Probe und insgesamt der doppelten Probenmenge (5 g) zeigt erwartungsgemäß keinen Filterbelag (AFR = 0). Als besondere Parameter wurden gewählt: 5 mal 1 g Probe (= insgesamt 5 g) und 500 μm Filter.

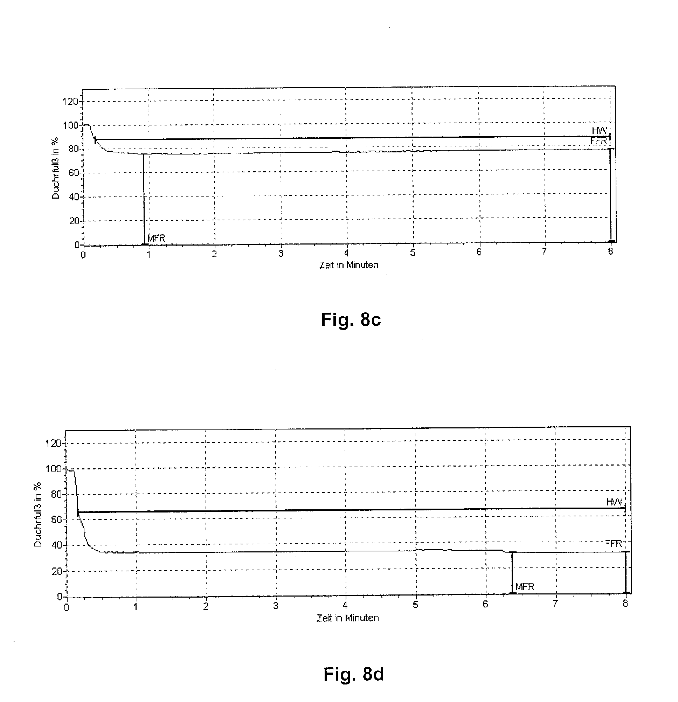

Bei einer Verminderung der Filtermaschenweite bei einer Einzelmessungen auf 315 μm mit derselben Probe wie in den Fig. 8a und 8b ändert sich der Kurvenverlauf sehr deutlich. Die Fig. 8c, 8d und 8e zeigen Einzelmessungen mit 1, 1,5 und 2,5 g Probenmenge bei der geringeren Filtermaschenweite von 315 μm. Der Durchfluss ist in allen Fällen vermindert, und zwar umso mehr, je größer die Probenmenge ist; während der Messzeit - hier bis 8 min - bleibt der Durchfluss nach dem anfänglichen Abfall konstant. Solche Kurvenverläufe sind typisch für Proben mit einem Hartkornanteil.

Die Messkurve in Fig. 8c zeigt eine Einzelmessung an Muster 1 mit der Probenweinwaage von 1 g Probe. Das Ergebnis ist FFR = 77 %.

Die Messkurve in Fig. 8d zeigt eine Einzelmessung an Muster 1 mit der Probenweinwaage von 1,5 g. Das Ergebnis ist FFR = 32%.

Die Messkurve in Fig. 8e zeigt eine Einzelmessung an Muster 1 mit der Probenweinwaage von 2,5 g. Das Ergebnis ist FFR = 3 %.

Die Messung in Fig. 8e ist in allen Parametern außer der Filtermaschenweite direkt mit Fig. 8a zu vergleichen. Der Vergleich dieser Messungen führt zu dem Schluss, dass in Muster 1 Hartkörner enthalten sind, die ein 500 μm-Filter passieren können, ein 315 μm-Filter jedoch nicht. Muster 1 ist damit ein Beispiel dafür, dass veränderte Parameter zu veränderten Messergebnissen führen können.

Eine Aufbaumessung mit derselben Probe wie in Fig. 8a bis 8e mit 315 μm-Filter (Fig. 9) verdeutlicht das noch stärker. Im 4. Messintervall, d. h. nachdem 4 mal 0,5 g (= 2 g) Probe das Filter passiert haben, sinkt der Durchfluss auf 0 %. Die Niveauabsenkung erfolgt annähernd proportional mit der Probenmenge. Das Ergebnis ist AFR = 50.

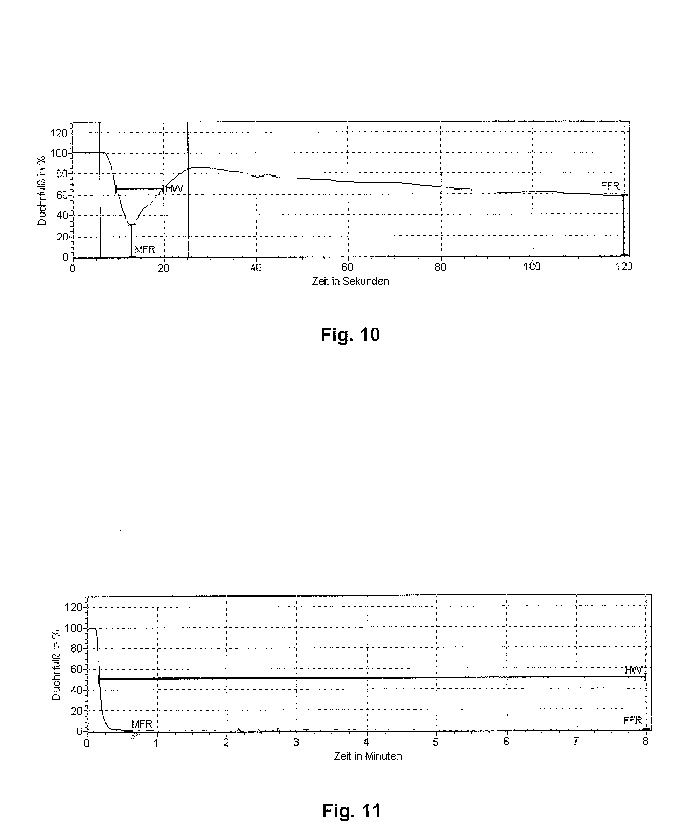

Fig. 10 zeigt den Kurvenverlauf bei einer Einzelmessung an einem Granulat, das im folgenden als Muster 2 bezeichnet wird. Der Kurvenverlauf ist typisch für Proben mit Hartkörnern. Der kleine Peak entspricht dem schnellen Granulatzerfall; der "Ausläufer" wird durch Hartkörner verursacht. Die senkrechten Linien können im verwendeten Messprogramm von Hand gesetzt werden und grenzen den Auswertebereich für den Peak ein. Die Ergebnisse dieser Einzelmessung sind: MFR = 32 %, HW = 11 s, PA = 36 % s/100, FFR = 59 %.

Fig. 11 zeigt den Kurvenverlauf bei einer Einzelmessung an einem weiteren Granulat, das im folgenden als Muster 3 bezeichnet wird. Der Kurvenverlauf zeigt die extreme Kurvenform einer Probe mit vielen Hartkörnern. Die Ergebnisse dieser Einzelmessung sind: MFR = 0 %, HW > 100 s, PA > 100 % s/100, FFR = 0 %. Da auch nach 8 min die Hartkörner noch nicht zerfallen sind, bedeutet das für die Praxis eine extrem schlechte Qualität.

Die Fig. 12 und 13 zeigen den Kurvenverlauf von Einzelmessungen an einem Granulat, das im folgenden mit Muster 4 bezeichnet wird. Es wurden jeweils 2,5 g Probe eingewogen. Die beiden Messungen unterscheiden sich in der Wassertemperatur.

Bei der Einzelmessung nach Fig. 12 wurde eine Wassertemperatur von 20°C eingestellt. Die Ergebnisse sind: MFR = 0 %, HW = 34 s, PA = 32,8 % s/100.

Bei der Einzelmessung nach Fig. 13 wurde eine Wassertemperatur von 10°C eingestellt. Die Ergebnisse sind: MFR = 0 %, HW = 94,4 s, PA = 92,8 % s/100.

Die Halbwertsbreite HW und die Peakfläche PA bei 10°C ist also bedeutend größer als bei 20°C; d. h. der Zerfall der Granulate erfolgt bei diesem Muster bei höheren Temperaturen schneller als bei tieferen.

**Patentansprüche**

1. Vorrichtung zur Messung der Dispergierbarkeit einer Probe in einer Flüssigkeit, wobei die Vorrichtung ein Aufgabegefäß (300) für die Probe, ein Filterelement (320), eine Pumpe (330) und einen Durchflussmesser (340) aufweist, die über einen Flüssigkeitskreislauf miteinander verbunden sind und das Filterelement (320) bezüglich der durch die Pumpe (330) vorgegebenen Strömungsrichtung stromabwärts hinter dem Aufgabegefäß (300) angeordnet ist.

2. Vorrichtung nach Anspruch 1, **dadurch gekennzeichnet, dass** das Aufgabegefäß (300) einen kreisförmigen Querschnitt hat, im oberen Teil zylindrisch und im unteren Teil kegelförmig geformt ist und eine tangentiale Zuführung (350) und einen zentralen Ablauf (310) für die Flüssigkeit aufweist.

3. Vorrichtung nach Anspruch 1 oder 2, **dadurch gekennzeichnet, dass** das Aufgabegefäß (300) doppelwandig ist.

4. Vorrichtung nach Anspruch 3, **dadurch gekennzeichnet, dass** zwischen den beiden Wänden des Aufgabegefäßes (300) Kühlflüssigkeit zirkulieren kann.

5. Vorrichtung nach einem der Ansprüche 1 bis 4, **dadurch gekennzeichnet, dass** das Aufgabegefäß (300) einen Überlauf (360) aufweist.

6. Vorrichtung nach einem der Ansprüche 1 bis 5, **dadurch gekennzeichnet, dass** der Körper 440 des Filterelements 320 aus durchsichtigem Kunststoff besteht.

7. Vorrichtung nach einem der Ansprüche 1 bis 6, **dadurch gekennzeichnet, dass** das Filtergewebe im Filterelement (320) einen Durchmesser im Bereich von 2 bis 20 mm, besonders bevorzugt im Bereich von 5 bis 10 mm hat.

8. Vorrichtung nach einem der Ansprüche 1 bis 7, **dadurch gekennzeichnet, dass** die Maschenweite des Filtergewebes im Filterelement (320) im Bereich von 50 bis 1000 µm, bevorzugt im Bereich von 150 bis 500 µm liegt.

9. Vorrichtung nach einem der Ansprüche 1 bis 8, **dadurch gekennzeichnet, dass** sie weiterhin ein Vorratsgefäß (370) für die Flüssigkeit aufweist, aus dem das Aufgabegefäß (300) mit Flüssigkeit befüllt werden kann.

10. Vorrichtung nach einem der Ansprüche 1 bis 9, **dadurch gekennzeichnet, dass** das Vorratsgefäß einen Thermostaten aufweist, der die Temperatur der Flüssigkeit im Vorratsgefäß in einem Temperaturbereich von 5 bis 30°C hält.

11. Vorrichtung nach einem der Ansprüche 1 bis 10, **dadurch gekennzeichnet, dass** der Flüssigkeitskreislauf einen Auslaß (365) für den Ablauf der Flüssigkeit aufweist.

**12.** Vorrichtung nach einem der Ansprüche 1 bis 11, **dadurch gekennzeichnet, dass** sie weiterhin eine Probezufuhrvorrichtung enthält, die eine Greifereinheit (390) und einen oder mehrere Probenbevorratungsbehälter (397) in einer Lagervorrichtung (395) aufweist.

**13.** Vorrichtung nach Anspruch 12, **dadurch gekennzeichnet, dass** die Probenbevorratungsbehälter (397) Einwegschalen sind.

**14.** Vorrichtung nach Anspruch 12 oder 13, **dadurch gekennzeichnet, dass** die Lagervorrichtung (395) ein Rack ist, das über einen Linearantrieb verschoben werden kann.

**15.** Vorrichtung nach einem der Ansprüche 12 bis 14, **dadurch gekennzeichnet, dass** die Greifereinheit (390) einen Drehantrieb (DI), einen Pneumatikzylinder (PZ2) und eine Greifer (GR1) aufweist.

**16.** Vorrichtung nach einem der Ansprüche 1 bis 15, **dadurch gekennzeichnet, dass** sie weiterhin eine Reinigungsvorrichtung für das Messgefäß (300) und das Filterelement (320) enthält.

**17.** Vorrichtung nach Anspruch 16, **dadurch gekennzeichnet, dass** die Reinigungsvorrichtung eine Düse (395), die durch den Pneumatikzylinder (PZ1) linear bewegt werden kann, und ein Wasserventil (WV2) zur Steuerung der Zufuhr der Reinigungsflüssigkeit aufweist.

**18.** Vorrichtung nach einem der Ansprüche 1 bis 17, **dadurch gekennzeichnet, dass** sie pneumatisch gesteuerte Ventile (SV1 bis SV5 und SV7) zur Regulierung des Flüssigkeitsflusses durch die Leitungen des Flüssigkeitskreislaufs und zum Ablauf (365) des Flüssigkeitskreislaufs aufweist.

**19.** Vorrichtung nach einem der Ansprüche 1 bis 18, **dadurch gekennzeichnet, dass** sie von einem Computer gesteuert wird, der die elektro-mechanischen, pneumatischen und hydraulischen Bestandteile der Vorrichtung steuert, die Daten der Proben und Parameterwerte speichert, die Messkurve aufnimmt, die Kennzahlen berechnet, sowie die Ergebnisse auf einer Ausgabeeinheit ausgeben kann.

**20.** Vorrichtung nach einem der Ansprüche 1 bis 19, **dadurch gekennzeichnet, dass** die zu messenden Proben ein Feststoff, bevorzugt Granulate sind.

**21.** Vorrichtung nach einem der Ansprüche 1 bis 20, **dadurch gekennzeichnet, dass** die Flüssigkeit Wasser ist.

**22.** Verfahren zur Messung des zeitlichen Verlaufs der Dispergierbarkeit einer Probe in einer Flüssigkeit bei dem

> a. die Flüssigkeit im Kreislauf durch ein Aufgabegefäß (300) für die Probe, ein bezüglich der durch die Pumpe (330) vorgegebenen Strömungsrichtung stromabwärts hinter dem Aufgabegefäß (300) angeordnetes Filterelement (320) und einen Durchflussmesser (340) gepumpt wird,

> b. der Durchfluss durch den Durchflussmesser (340) über die Zeit gemessen wird während und nachdem die Probe in das Aufgabegefäß (300) gegeben wird bzw. wurde, und

> c. charakteristische Merkmale der Messkurve des Durchflusses über die Zeit ausgewertet werden.

**23.** Verfahren nach Anspruch 22, **dadurch gekennzeichnet, dass** nach der Aufnahme jeder Messkurve das Filterelement (320) gereinigt wird.

**24.** Verfahren nach Anspruch 22 oder 23, **dadurch gekennzeichnet, dass** die Probe ein Feststoff, bevorzugt ein Granulat ist.

**25.** Verfahren nach einem der Ansprüche 22 bis 24, **dadurch gekennzeichnet, dass** die Flüssigkeit Wasser ist.

**26.** Verfahren nach einem der Ansprüche 22 bis 25, **dadurch gekennzeichnet, dass** Messkurven für verschiedene Maschenweiten des Filterelements (320), Flüssigkeitstemperaturen und/oder Probenkonzentrationen aufgenommen werden.

**27.** Verfahren nach Anspruch 26, **dadurch gekennzeichnet, dass** die Maschenweite des Filterelements (320) im Bereich von 50 bis 1000 µm, bevorzugt im Bereich von 150 bis 500 µm liegt.

**28.** Verfahren nach Anspruch 26, **dadurch gekennzeichnet, dass** die Flüssigkeitstemperatur im Bereich von 5 bis 30°C liegt.

**29.** Verfahren nach Anspruch 26, **dadurch gekennzeichnet, dass** die Probenkonzentration im Bereich von 0,05 % bis 5 %, bevorzugt im Bereich von 0,1 % bis 1 % liegt.

**30.** Verfahren nach einem der Ansprüche 22 bis 29, **dadurch gekennzeichnet, dass** die Flüssigkeit Wasser ist und die Wasserhärte im Bereich von 342 bis 500 ppm liegt.

**31.** Verfahren nach einem der Ansprüche 22 bis 30, **dadurch gekennzeichnet, dass** als charakteristische Merkmale die Tiefe, Breite und/oder Fläche eines Peaks in der Durchfluss-Messkurve und/oder die Abweichung des Durchflusses nach dem Peak von dem Durchfluss vor dem Peak, dienen.

**32.** Verfahren zum Nachweis von Hartkörnern in einer Dispersion, bei dem

a. die Flüssigkeit im Kreislauf durch ein Aufgabegefäß (300) für die Probe, ein bezüglich der durch die Pumpe (330) vorgegebenen Strömungsrichtung stromabwärts hinter dem Aufgabegefäß (300) angeordnetes Filterelement (320) und einen Durchflussmesser (340) gepumpt wird,

b. der Durchfluss durch den Durchflussmesser (340) über eine vorgegebene Zeit gemessen wird während und nachdem eine Probe in das Aufgabegefäß (300) gegeben wird bzw. wurde,

c. die Flüssigkeit abgelassen und neue Flüssigkeit zugeführt wird ohne einen eventuell vorhandenen Filterbelag zu entfernen,

d. die Schritte b, und c. mit weiteren Portionen derselben Probe mehrfach wiederholt werden,

e. charakteristische Merkmale der Messkurve des Durchflusses über die Zeit ausgewertet werden.

**33.** Verfahren nach Anspruch 32, **dadurch gekennzeichnet, dass** nach Schritt e. das Filterelement (320) gereinigt wird.

**34.** Verfahren nach Anspruch 32 oder 33, **dadurch gekennzeichnet, dass** die Probe ein Feststoff, bevorzugt ein Granulat ist.

**35.** Verfahren nach einem der Ansprüche 32 bis 34, **dadurch gekennzeichnet, dass** die Flüssigkeit Wasser ist.

**36.** Verfahren nach einem der Ansprüche 32 bis 35, **dadurch gekennzeichnet, dass** Messkurven für verschiedene Maschenweiten des Filterelements (320), Flüssigkeitstemperaturen und/oder Probenkonzentrationen aufgenommen werden.

**37.** Verfahren nach Anspruch 36, **dadurch gekennzeichnet, dass** die Maschenweite des Filterelements (320) im Bereich von 50 bis 1000 µm, bevorzugt im Bereich von 150 bis 500 µm liegt.

**38.** Verfahren nach Anspruch 36, **dadurch gekennzeichnet, dass** die Flüssigkeitstemperatur im Bereich von 5 bis 30°C liegt.

**39.** Verfahren nach Anspruch 36, **dadurch gekennzeichnet, dass** die Probenkonzentration im Bereich von 0,05 % bis 5 %, bevorzugt im Bereich von 0,1 % bis 1 % liegt.

**40.** Verfahren nach einem der Ansprüche 32 bis 39, **dadurch gekennzeichnet, dass** die Flüssigkeit Wasser ist und die Wasserhärte im Bereich von 342 bis 500 ppm liegt.

**41.** Verfahren nach einem der Ansprüche 32 bis 40, **dadurch gekennzeichnet, dass** die Schritte b. und c. bis zu zwanzig mal, bevorzugt fünf bis zehn mal wiederholt werden.

**42.** Verfahren nach einem der Ansprüche 32 bis 41, **dadurch gekennzeichnet, dass** die vorgegebene Messzeit pro Probe 0,5 bis 5 min, bevorzugt 1 min bis 3 min beträgt.

**43.** Verfahren nach einem der Ansprüche 32 bis 42, **dadurch gekennzeichnet, dass** als charakteristisches Merkmal die Abweichung des Durchflusses nach dem letzten Messintervall von dem Durchfluss zu Beginn des ersten Messintervalls, dient.

**44.** Verfahren nach einem der Ansprüche 32 bis 42, **dadurch gekennzeichnet, dass** als charakteristische Merkmale die Abnahme des Durchflusses am Ende eines jeden Messintervalls dienen.

**45.** Verfahren nach Anspruch 44, **dadurch gekennzeichnet, dass** aus der Abnahme des Durchflusses am Ende eines jeden Messintervalls die mittlere Durchflussminderung (AFR) über

$$AFR = \frac{\text{Mittelwert der Differenzen der Durchflussminderung je Messintervall [\%]}}{\text{Probenmenge [g]}} \; [\%/g]$$

bestimmt wird.

**46.** Verfahren nach Anspruch 45, **dadurch gekennzeichnet, dass** mit der mittleren Durchflussminderung (AFR) die kritische Masse (CM) nach

$$CM \, [g] = \text{Flächenrelation} * \text{Störungsbedeckung [\%] / AFR[\%/g]}$$

bestimmt wird

**47.** Gesamtverfahren, bei dem das Verfahren nach einem der Ansprüche 22 bis 31 und das Verfahren nach einem der Ansprüche 32 bis 46 nacheinander mit Portionen derselben Probe durchgeführt werden.

Fig. 1

Fig. 2

**Fig. 3**

**Fig. 4**

EP 1 351 047 A1

Fig. 5

19

EP 1 351 047 A1

Fig. 6

20

**Fig. 7a**

Fig. 7b

Fig. 7c

**Fig.8a**

**Fig. 8b**

**Fig. 8c**

**Fig. 8d**

**Fig. 8e**

**Fig. 9**

**Fig. 10**

**Fig. 11**

**Fig. 12**

**Fig. 13**

**Europäisches**
**Patentamt**

**EUROPÄISCHER RECHERCHENBERICHT**

Nummer der Anmeldung

EP 03 00 6282

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 40 39 875 A (RHONE POULENC AGROCHIMIE) 20. Juni 1991 (1991-06-20) * Seite 2, Zeile 68 - Seite 3, Zeile 11 * --- | 1,22,32 | G01N15/06 |
| A | DE 23 09 595 A (ENTPR DE RECH S ET D ACTIVITES) 11. Oktober 1973 (1973-10-11) * Seite 4, letzter Absatz - Seite 7, erster Absatz; Abbildungen * --- | 1 | |
| A | DE 16 35 555 B (DU PONT) 4. Februar 1971 (1971-02-04) * Spalte 13, Zeilen 14-37 * ----- | 22,32 | |

RECHERCHIERTE
SACHGEBIETE (Int.Cl.7)

G01N

Der vorliegende Recherchenbericht wurde für alle Patentansprüche erstellt

| Recherchenort | Abschlußdatum der Recherche | Prüfer |
|---|---|---|
| MÜNCHEN | 7. Juli 2003 | Hoogen, R |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
....................................................................................
& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 00 6282

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2003

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE | 4039875 | A | 20-06-1991 | FR | 2655816 | A1 | 21-06-1991 |
| | | | | AP | 269 | A | 18-06-1993 |
| | | | | AT | 398882 | B | 27-02-1995 |
| | | | | AT | 253990 | A | 15-07-1994 |
| | | | | AU | 641961 | B2 | 07-10-1993 |
| | | | | AU | 6800990 | A | 20-06-1991 |
| | | | | BE | 1005339 | A0 | 29-06-1993 |
| | | | | BR | 9006457 | A | 01-10-1991 |
| | | | | CH | 681764 | A5 | 28-05-1993 |
| | | | | CZ | 9006253 | A3 | 13-10-1999 |
| | | | | DE | 4039875 | A1 | 20-06-1991 |
| | | | | ES | 2033196 | A1 | 01-03-1993 |
| | | | | GB | 2238960 | A ,B | 19-06-1991 |
| | | | | IL | 96604 | A | 31-12-1995 |
| | | | | IT | 1244883 | B | 12-09-1994 |
| | | | | JP | 3255001 | A | 13-11-1991 |
| | | | | KR | 178781 | B1 | 01-04-1999 |
| | | | | MX | 174070 | B | 19-04-1994 |
| | | | | NL | 9002765 | A | 01-07-1991 |
| | | | | NZ | 236476 | A | 25-11-1993 |
| | | | | OA | 9474 | A | 15-11-1992 |
| | | | | PT | 96190 | A ,B | 30-09-1991 |
| | | | | SK | 625390 | A3 | 02-12-1998 |
| | | | | TR | 26233 | A | 15-02-1995 |
| | | | | US | 5656281 | A | 12-08-1997 |
| | | | | ZA | 9009660 | A | 28-08-1991 |
| DE | 2309595 | A | 11-10-1973 | FR | 2174328 | A5 | 12-10-1973 |
| | | | | CA | 999677 | A1 | 09-11-1976 |
| | | | | DE | 2309595 | A1 | 11-10-1973 |
| | | | | GB | 1358527 | A | 03-07-1974 |
| | | | | IT | 977836 | B | 20-09-1974 |
| | | | | NL | 7302786 | A | 30-08-1973 |
| | | | | SE | 394217 | B | 13-06-1977 |
| | | | | SU | 828986 | A3 | 07-05-1981 |
| | | | | US | 3872710 | A | 25-03-1975 |
| DE | 1635555 | B | 04-02-1971 | BE | 706510 | A | 14-05-1968 |
| | | | | CH | 523364 | A | 31-05-1972 |
| | | | | DE | 1635555 | B1 | 04-02-1971 |
| | | | | FR | 1555705 | A | 31-01-1969 |
| | | | | GB | 1199190 | A | 15-07-1970 |
| | | | | NL | 6715450 | A | 15-05-1968 |

EPO FORM P0461

Für nähere Einzelheiten zu diesem Anhang : siehe Amtsblatt des Europäischen Patentamts, Nr.12/82